# EUROPÄISCHE PATENTANMELDUNG

(11) **EP 2 143 922 A1**
(43) Veröffentlichungstag der Anmeldung: **13.01.2010**
(21) Anmeldenummer: 08104729.2
(22) Anmeldetag: 11.07.2008
(51) Int. Cl.: F02F 1/24, F01N 13/10, F02B 37/02, F01N 13/00

(54) **Zylinderkopf mit Abgaskrümmer und Turbolader**

(71) Anmelder: Ford Global Technologies, LLC, Dearborn, MI 48126 (US)
(72) Erfinder: Kuhlbach, Kai, 51427, Bergisch Gladbach (DE); Bartsch, Guenther, 51645, Gummersbach (DE); Borrmann, Dirk, 50354, Huerth (DE); Schorn, Norbert, 52080, Aachen (DE); Friedfeldt, Rainer, 50354 Hürth (DE)
(74) Vertreter: Drömer, Hans-Carsten

(57) **Zusammenfassung**

Bauteil für eine Brennkraftmaschine mit mindestens zwei Zylindern, enthaltend mindestens einen Zylinderkopf, mindestens einen Abgaskrümmer und mindestens einen Turbolader mit einem Turboladergehäuse, wobei
- jeder Zylinder mindestens eine Auslaßöffnung zum Abführen der Abgase aus dem Zylinder aufweist, wobei
- sich an jede Auslaßöffnung eine Abgasleitung anschließt, wobei
- die Abgasleitungen der mindestens zwei Zylinder innerhalb des Zylinderkopfes zu einer Gesamtabgasleitung zusammengeführt werden und der Zylinderkopf, der Abgaskrümmer und zumindest Teile des Turboladergehäuses einstückig ausgestaltet sind.

## Beschreibung

Die Erfindung betrifft einen Zylinderkopf für Brennkraftmaschinen bei dem der Abgaskrümmer und der Turbolader Teil des Zylinderkopfes sind.

Der Trend im Motorenbau geht zur Zeit weg von Saugmotoren hin zu aufgeladenen Brennkraftmaschinen bzw. Verbrennungsmotoren. Dieser Trend ist schon seit einiger Zeit bei Dieselmotoren zu beobachten, setzt sich jetzt aber zunehmend auch für Benzinmotoren durch.

Aufgeladene Motoren werden aus ökonomischen Gründen eingesetzt, da ein kleinerer aufgeladener Motor einen größeren Saugmotor ersetzen kann. Bei niedrigen Lasten kann ein kleiner aufgeladener Motor z. B. durch geringere Zylinderzahl und Reibung, sowie geringere Drosselung viel wirtschaftlicher arbeiten als ein größerer Saugmotor und wenn der Fahrer eines Fahrzeugs mit aufgeladenem Motor hohe oder höhere Leistung verlangt, kann dies über die Aufladung erzielt werden. Der aufgeladene Motor kann so bei kleinerem Hubraum, kleineren Abmaßen und geringerem Gewicht die gleichen Anforderungen wie ein größerer Saugmotor erfüllen.

Ein Nachteil der aufgeladenen Motoren, hier bei aufgeladen Motoren mittels Turbolader, sind die hohen Kosten für den Abgaskrümmer und das Turboladergehäuse. Da beide Teile sehr hohe Temperaturen aushalten müssen, sind sie üblicherweise aus Stahlguß oder Stahlblech gefertigt. Die entsprechenden Stahlqualitäten enthalten in der Regel einen hohen Legierungsanteil, wobei in Regel ein hoher Anteil an Nickel zulegiert wird. So enthalten gegossene Turboladergehäuse Nickelanteile bis zu 37%. Nachteilig ist insbesondere der hohe Preis für Nickel, der in der letzten Zeit kontinuierlich steigt.

Eine Möglichkeit diese Nachteile zu vermindern, ist es, den Abgaskrümmer mit dem Zylinderkopf einstückig auszuführen. Dies gilt sowohl für Abgaskrümmer aus Aluminium als auch aus Grauguß. Diese Integration ist bekannt und z. B. in der EP 1006272 B1 oder in der EP-Anmeldung 07110193.5 beschrieben.

Aufgabe der Erfindung ist es daher, die oben beschriebenen Nachteile noch weiter zu vermindern und einen möglichst kostengünstigen und kompakten Verbrennungsmotor herzustellen.

Dies wird erreicht durch ein Bauteil bzw. eine Anordnung nach Anspruch 1. Dabei wird ein Zylinderkopf für eine Brennkraftmaschine mit mindestens zwei Zylindern derart ausgestaltet, daß die Abgasleitungen der mindestens zwei Zylinder innerhalb des Zylinderkopfes zusammengeführt werden und zusätzlich zumindest Teile eines Turboladers bzw. Turboladergehäuses einstückig mit dem Zylinderkopf ausgestaltet sind. D. h. der Abgaskrümmer und/oder zumindest Teile des Turboladers bzw. Teile des ein- oder mehrteiligen Turboladergehäuses sind in den Zylinderkopf integriert, also Teil des Zylinderkopfes.

Die Erfindung ist dabei nicht auf Fremdzündungsbrennkraftmaschinen beschränkt sondern schließt ausdrücklich Selbstzündungsbrennkraftmaschinen ein.

Turboladergehäuse bestehen üblicherweise aus Stahlguß für das Gehäuse der Turbinenseite und Aluminiumguß für das Gehäuse der Kompressorseite. Vorteilhaft im Sinne der Erfindung ist es, zumindest das Gehäuse für die Kompressorseite einstückig mit dem Zylinderkopf und Abgaskrümmer auszuführen.

Vorstellbar ist es aber auch, das Gehäuse oder zumindest Teile des Gehäuses für die Turbinenseite ebenfalls einstückig mit dem Gehäuse für die Kompressorseite, dem Abgaskrümmer und dem Zylinderkopf auszuführen. Es ist dann sinnvoll, das Gehäuse zu kühlen, z. B. durch Einbindung in den Kühlkreislauf der Brennkraftmaschine.

Diese sehr kompakte Ausgestaltung ermöglicht es, den Turbolader sehr nahe an den Auslaßventilen anzuordnen. Die wärmeabgebende Fläche und das Volumen der Kanäle vom Zylinder bis zum Turbolader werden so deutlich reduziert. Dies bedeutet einen geringeren Entalphieverlust verglichen mit bekannten Anwendungen und damit ein schnellere Ansprechen des Turboladers z. B. bei Lastwechseln. Dies vermindert drastisch das sogenannte Turboloch.

Bevorzugt werden zumindest Teile des Abgaskrümmers und/oder Teile des Turboladergehäuses gekühlt. Dadurch kann eine Absenkung der Abgastemperaturen insbesondere bei Vollast erreicht werden. Heutzutage wird häufig bei Vollast das Verbrennungsgemisch angefettet (Lambda < 1) um die Verbrennungstemperaturen zu senken und damit die Abgastemperaturen zu senken, damit nicht der Abgaskrümmer oder der Turbolader durch unzulässig hohe Temperaturen geschädigt werden. Gegenüber den zur Zeit ausgeführten Turbomotoren bedeutet dies eine signifikante Verringerung des Kraftstoffverbrauchs bzw. CO₂ Ausstoß pro Kilometer für den Ottomotor. Sinnvoll ist es auch deshalb, zumindest Teile des Abgaskrümmers und Teile des Turboladers bzw. des Turboladergehäuses in den Kühlkreislauf einer wassergekühlten Brennkraftmaschine einzubeziehen. Dazu wird das Bauteil mit mindestens einem geeigneten Kühlkanal versehen.

Vorteilhafterweise wird das erfindungsgemäße Bauteil bestehend aus Zylinderkopf, Abgaskrümmer und zumindest Teilen eines Turboladergehäuses einstückig aus Aluminiumguß hergestellt. Dadurch wird eine besonders hohe Gewichtsersparnis im Vergleich zu konventionellen Designs erreicht, bei denen der Abgaskrümmer und das Turboladergehäuse aus Stahl bestehen.

Allerdings ist es auch denkbar, das erfindungsgemäße Bauteil z. B. aus Grauguß oder anderen Gußmaterialien herzustellen, da die Vorteile in Bezug auf Turboladeransprechverhalten und Abgastemperaturverhalten unabhängig vom Gußmaterial erhalten bleiben.

Dadurch, daß zumindest Teile des Abgaskrümmers und/oder des Turboladers bzw. Turboladergehäuses in den Kühlkreislauf einbezogen sind, werden, im Vergleich zum konventionellen Design, thermisch besonders belastete Bauteile mit durch den Kühlkreislauf gekühlt. Dies führt vorteilhafterweise beim Kaltstart einer Brennkraftmaschine zu besonders schneller Erwärmung des Kühlmittels, damit zu einer schnellerer Aufwärmung der Brennkraftmaschine und, sofern eine Kühlmittelbetriebene Heizung eines Fahrgastraumes eines Fahrzeugs vorgesehen ist, zu einer schnelleren Aufheizung dieses Fahrgastraumes.

Das beschriebene Bauteil weist erfindungsgemäß deutlich kürzere Abgaswege und damit eine deutlich verringerte wärmetauschende Fläche im Vergleich zum konventionellen Design auf. Schließt sich nun an den Turbolader eine katalytische Nachbehandlung (Katalysator) der Abgase an, so werden im Falle eines sogenannten Kaltstarts die Abgase wesentliche schneller die Temperaturen erreichen, die nötig sind, die katalytischen Reaktionen zu starten. Dies bedeutet weniger Verbrennungsgemischanfettung im Vergleich zum bekannten Design.

Vorteilhaft ist das beschrieben Bauteil auch in Bezug auf das Layout eines Motorraumes. Da die thermisch besonders belasteten Bauteile, wie bereits beschrieben, gekühlt werden, entfallen heute übliche Abschirmungen und Hitzebleche, die in bekannter Weise konventionelle Abgaskrümmer und/oder Turbolader abschirmen, damit benachbarte Bauteile nicht durch zu hohe Temperaturen gestört oder beschädigt werden.

Auch reduziert die beschriebene Anordnung deutlich den benötigten Bauraum für eine Brennkraftmaschine im Motorraum eines Fahrzeugs in vorteilhafter Weise.

Bevorzugt ermöglicht die erfindungsgemäße Anordnung die Integration weiterer Komponenten. So ist es z. B. möglich, Frischluftleitungen zum und vom Kompressor besser anzubinden. Z. B. ist es möglich, eine Frischluftleitung in einen Zylinderkopfdeckel zu integrieren und die kurze Distanz bis zum Kompressorgehäuse mittels eines Kanals zu überbrücken, wobei z. B. dieser Kanal auch Bestandteil des erfindungsgemäßen Zylinderkopfbauteils sein kann.

Erfindungsgemäß kann z. B. das Überdruckventil eines Turboladers, das sogenannte Waste-gate, in das erfindungsgemäße Bauteil integriert werden. Dieses Waste-gate regelt den Abgasüberdruck und damit die Turbine eines Turboladers. Die sonst übliche zusätzliche Abgasleitung vom Waste-gate zum Abgassystem kann auch in das erfindungsgemäße Bauteil integriert sein.

Vorteilhafterweise wird zusätzlich zu den bereits erwähnten integrierten Kühlmittelkanälen mindestens einen Ölkanal in das erfindungsgemäße Bauteil integriert. Z. B. läßt sich so die Ölversorgung für die Turboladerwelle sicherstellen.

Es ist aber auch vorstellbar, daß das Öl durch integrierte Kanäle während eines Kaltstarts besonders schnell aufgeheizt wird und somit schneller als bisher üblich die gewünschte Betriebstemperatur erreicht.

Insbesondere kann auch die Turbinenseite bzw. das Turbinengehäuse eines Turboladers besonders gekühlt werden, so daß z. B. auch das Turbinengehäuse aus Aluminium gefertigt sein kann und Teil des erfindungsgemäßen Bauteils wird. Die Turboladerwelle mit Turbinen- und Kompressorrad könnte dann als separates Bauteil z. B. in Form einer Kassette eingeschoben werden.

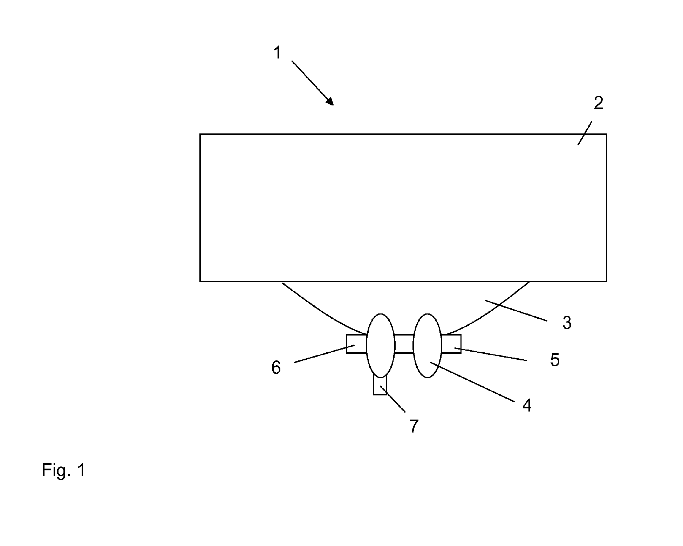

Die einzige Figur zeigt eine schematische Darstellung des erfindungsgemäßen Bauteils 1. Dies besteht aus einem gemeinsamen, einstückigen Gußteil bestehend aus Zylinderkopf 2, Abgaskrümmer 3 und Turbolader 4. Da der Turbolader 4 direkt aus dem Abgaskrümmer 3 mit Abgas versorgt wird, entfällt der entsprechende Anschluß. Die Abgase verlassen die Turbinenseite daher durch den Anschluß 5. Die Verbrennungsluft wird durch den Stutzen 6 in den Kompressorteil des Turboladers 4 gesaugt, verdichtet und verläßt den Turbolader 4 durch den Anschluß 7. Anschluss 7 kann zum Beispiel im Guß bereits so ausgerichtet sein, dass die verdichtete Luft z. B. durch den Ventildeckel dem Einlaßsystem des Motors zugeführt wird und weitere Rohre vermeidet.

## Patentansprüche

1. Bauteil (1) für eine Brennkraftmaschine mit mindestens zwei Zylindern, enthaltend mindestens einen Zylinderkopf (2), mindestens einen Abgaskrümmer (3) und mindestens einen Turbolader (4) mit einem Turboladergehäuse, wobei
- jeder Zylinder mindestens eine Auslaßöffnung zum Abführen der Abgase aus dem Zylinder aufweist, wobei
- sich an jede Auslaßöffnung eine Abgasleitung anschließt, wobei
- die Abgasleitungen der mindestens zwei Zylinder innerhalb des Zylinderkopfes (2) zu einer Gesamtabgasleitung zusammengeführt werden
**dadurch gekennzeichnet, daß**
der Zylinderkopf (2), der Abgaskrümmer (3) und zumindest Teile des Turboladers (4) bzw. Teile des ein- oder mehrteiligen Turboladergehäuses einstückig ausgestaltet bzw. ausgeführt ist.

2. Bauteil (1) nach Anspruch 1
**dadurch gekennzeichnet, daß**
das Bauteil (1) aus Aluminiumguß hergestellt wird.

3. Bauteil (1) nach Anspruch 1 oder 2
**dadurch gekennzeichnet, daß**
das Bauteil (1) mindestens einen Kühlkanal aufweist, der an den Kühlkreislauf der Brennkraftmaschine angebunden ist.

4. Bauteil (1) nach Anspruch 3
**dadurch gekennzeichnet, daß**
das Turboladergehäuse mindestens einen Kühlkanal zur Kühlung der Turbinenseite und/oder der Turboladerwellenlager aufweist.

5. Bauteil (1) nach Anspruch 1, 2, 3oder 4
**dadurch gekennzeichnet, daß**
das Überdruckventil und/oder der Überdruckkanal eines Turboladers (4) in das Bauteil (1) integriert sind.

6. Bauteil (1) nach mindestens einem der vorhergehenden Ansprüche
**dadurch gekennzeichnet, daß**
das Bauteil (1) mindestens einen Ölkanal aufweist.

7. Bauteil (1) nach mindestens einem der vorhergehenden Ansprüche
**dadurch gekennzeichnet, daß**
das Bauteil (1) derart ausgestaltet ist, daß das Turboladergehäuse vollständig in das Bauteil (1) integriert ist, und daß die Turboladerwelle mit Kompressor- und Turbinenrad als Kassette eingeschoben werden kann.
